# DEMANDE DE BREVET EUROPEEN

(11) **EP 2 026 221 A1**
(43) Date de publication de la demande: **18.02.2009**
(21) Numéro de dépôt: 08161822.5
(22) Date de dépôt: 05.08.2008
(51) Int. Cl.: G06F 17/30

(54) **Système et procédé de gestion d'informations**

(30) Priorité: 07.08.2007 FR 0756975
(71) Demandeur: ALSTOM Transport SA, 92300 Levallois-Perret (FR)
(72) Inventeur: Mesbah, Nabil, 75012 PARIS (FR)
(74) Mandataire: Blot, Philippe Robert Emile

(57) **Abrégé**

Le système comprend un premier entrepôt de données (38) comportant un premier support physique de stockage (42), dans lequel des occurrences d'informations sont enregistrées, et un second entrepôt de données (24) comportant un second support physique de stockage (30), dans lequel des occurrences d'informations sont enregistrées.

Le système comprend en outre, pour chaque information d'un ensemble d'informations dont une première occurrence (50) est enregistrée dans le premier support physique de stockage et dont une seconde occurrence (26) est enregistrée dans le second support physique de stockage (30), un logiciel de surveillance (60) de la première occurrence de l'information, et un logiciel de modification (56) de la seconde occurrence de l'information.

## Description

La présente invention concerne un système de gestion d'informations entre entrepôts de données.

Un entrepôt de données est moyen informatique de stockage organisé d'un ensemble de données. Le stockage est géré par un seul logiciel, on parle alors plutôt de base de données, ou par plusieurs logiciels, chacun gérant une partie des données de l'ensemble.

L'invention s'applique tout particulièrement dans le cas de deux entrepôts de données hétérogènes, c'est-à-dire dans lesquels l'organisation des données est différente.

Dans l'état de la technique, il est connu de disposer d'un premier entrepôt de données stockant des informations, et d'un second entrepôt de données stockant une réplication des informations du premier entrepôt.

C'est par exemple le cas pour la génération de manuels constitués d'un document de présentation structurée d'informations décrivant une machine.

En effet, un archiviste désirant réaliser un tel manuel a besoin d'un entrepôt de données regroupant des informations se rapportant à au moins une machine, par exemple un train.

L'entrepôt de données, dit entrepôt de référence, est installé sur un serveur accessible par réseau afin que les personnes autorisées puissent le faire évoluer à distance. Ainsi, des données peuvent être ajoutées, supprimées ou modifiées.

Généralement, ces personnes autorisées ne modifient pas directement l'entrepôt de référence, mais plutôt un entrepôt source qui regroupe les informations particulières utilisées par un service de l'entreprise : entrepôt source du service R&D, entrepôt source du service maintenance, etc. De même, l'entrepôt source peut être extérieur à l'entreprise et constituer la base de données d'un sous-traitant.

Afin de s'assurer que l'entrepôt de référence soit à jour, il est connu de recopier à intervalles réguliers le contenu complet des entrepôts sources vers l'entrepôt de référence.

Un problème de cet état de la technique réside dans le fait que l'opération de recopie est longue et nécessite de grandes ressources informatiques, puisque l'ensemble des données est recopié. En outre, entre les instants de mise à jour, les changements apportés à un entrepôt source ne sont pas répercutés sur l'entrepôt de référence de l'archiviste.

L'invention a pour but de remédier à ce problème en proposant un système de mise à jour en temps réel entre deux entrepôts de donnée :
- un premier entrepôt de données comportant :
   + un premier support physique de stockage, dans lequel des occurrences d'informations sont enregistrées,
- un second entrepôt de données comportant :
   + un second support physique de stockage, dans lequel des occurrences d'informations sont enregistrées,
      le système de gestion d'informations étant caractérisé en ce qu'il comprend, pour chaque information d'un ensemble d'informations dont une première occurrence est enregistrée dans le premier support physique de stockage et dont une seconde occurrence est enregistrée dans le second support physique de stockage :

   - un logiciel de surveillance de la première occurrence de l'information,
   - un logiciel de modification de la seconde occurrence de l'information,
      chaque logiciel de surveillance étant associé à une unique première occurrence d'information, chaque logiciel de modification étant associé à une unique seconde occurrence d'information,
      le logiciel de surveillance étant configuré pour, en cas de modification de la première occurrence, envoyer un message de modification à destination du logiciel de modification, ce message de modification comportant des données représentant la modification de la première occurrence de l'information,
      le logiciel de modification étant configuré pour, suite à la réception du message de modification de la part du logiciel de surveillance, modifier la seconde occurrence de l'information à partir des données représentant la modification de la première occurrence, les logiciels de surveillance et les logiciels de modification étant chacun adaptés pour être exécutés indépendamment de l'exécution des autres.

Suivant des modes particuliers de réalisation, le système comprend l'une ou plusieurs des caractéristiques suivantes, prise(s) isolément ou suivant toutes les combinaisons techniquement possibles :
- le logiciel de surveillance est configuré pour, suite à la modification de la première occurrence, lire la première occurrence de l'information, les données représentant la modification de la première occurrence de l'information comportant la première occurrence lue,
- le message de modification à destination du logiciel de modification comprend uniquement les modifications apportées à la première occurrence,
- il comprend :

- un document informatique comportant au moins une troisième occurrence d'une information de l'ensemble d'informations dont une première occurrence est enregistrée dans le premier support physique de stockage et dont une seconde occurrence est enregistrée dans le second support physique de stockage,
- des moyens de visualisation du document configurés pour traiter le document informatique pour générer des instructions de visualisation, par exemple à destination d'un écran ou d'une imprimante, et
- pour chaque troisième occurrence, un logiciel de mise à jour de la troisième occurrence de l'information, configuré pour :
   * lire la seconde occurrence de l'information,
   * recopier dans le document informatique la troisième occurrence de l'information par la seconde occurrence lue,
   les moyens de visualisation étant configurés pour solliciter les logiciels de mise à jour de toutes les troisièmes occurrences d'information du document informatique, afin que ces logiciels de mise à jour réalisent les étapes précédentes.

L'invention a également pour objet un procédé de gestion d'informations d'un système d'informations tel que décrit ci-dessus, caractérisé en ce qu'il comprend :
- si la première occurrence est modifiée, l'envoi par le logiciel de surveillance d'un message de modification à destination du logiciel de modification, ce message de modification comportant des données représentant la modification de la première occurrence de l'information,
- suite à la réception du message de modification par le logiciel de modification, représentant la modification de la première occurrence de l'information la modification par le logiciel de modification la seconde occurrence de l'information à partir des données représentant la modification de la première occurrence de l'information.

L'invention sera mieux comprise à l'aide la description qui va suivre, donnée uniquement à titre d'exemple et faite en se référant aux dessins annexés, parmi lesquels :
- la figure 1 est une vue schématique représentant d'un système de gestion d'informations selon l'invention ; et
- la figure 2 est un schéma bloc représentant les étapes de procédés mis en oeuvre par le système de la figure 1.

Le système de gestion d'informations de l'invention gère des informations qui sont dupliquées dans plusieurs dispositifs informatiques. Dans la description qui va suivre, on parlera donc d'occurrence d'une information pour désigner chaque duplication de cette information.

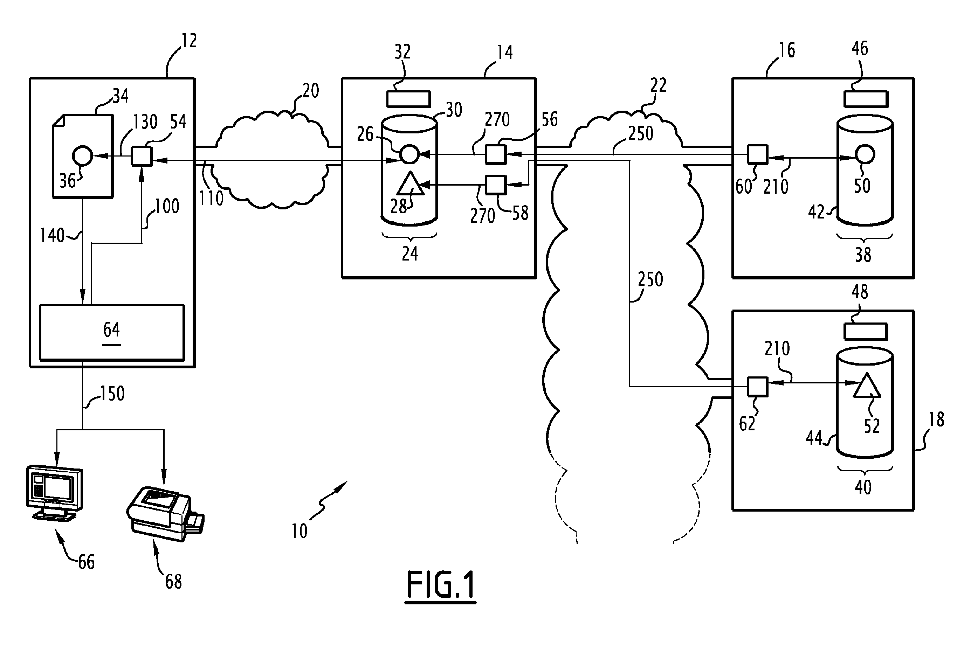

En référence à la figure 1, le système de gestion d'informations, désigné par la référence générale 10, comprend au moins un ordinateur 12, un premier serveur, dit serveur de référence 14, et un ou plusieurs autres serveurs, dits serveurs sources 16, 18.

Le serveur de référence 14 est relié, d'une part, à l'ordinateur 12 par l'intermédiaire d'un premier réseau 20 d'échange de données, et, d'autre part aux serveurs sources 16, 18 par un second réseau 22 d'échange de données, qui peut être le même que le premier réseau 20. Ces réseaux 20, 22 sont par exemple le réseau Internet, ou bien un réseau local de type LAN, et permettent de préférence des liaisons à des distances comprises entre 100 mètres et plusieurs kilomètres.

Le serveur de référence 14 comprend un entrepôt de données, dit entrepôt de référence 24, regroupant de manière organisée des occurrences 26, 28 d'informations A, B. L'entrepôt de référence 24 comporte, d'une part, un support physique de stockage 30, dans lequel les occurrences 26, 28 des informations A, B sont enregistrées, et, d'autre part, un logiciel de gestion 32 du support physique 30, ce logiciel de gestion 32 étant adapté pour recevoir des requêtes de consultation ou de modification des occurrences d'informations enregistrées dans le support physique de stockage 30. Les informations A, B sont destinées à être utilisées par le ou les ordinateurs 12 et proviennent des serveurs sources 16, 18.

Un document informatique 34 est enregistré dans la mémoire de l'ordinateur 12. Ce document 34 est un manuel technique de présentation, sous forme structurée, de plusieurs informations. Ces informations concernent par exemple des pièces ou des procédures de maintenance de machines, et sont par exemple du texte ou une image. Les informations sont enregistrées dans le document 34 sous forme d'occurrences d'informations, dites occurrences locales.

Par soucis de clarté, le document 34 de la figure 1 ne comprend qu'une seule occurrence locale 36 de l'information A (l'information B n'est pas utilisée dans le document 40). Bien sûr, en pratique, le document 34 regroupe généralement plusieurs occurrences d'informations.

Chaque serveur source 16, 18 comprend un entrepôt de données respectif, dit entrepôt source 38, 40, regroupant de manière organisée des occurrences d'informations. Ces occurrences sont dites occurrences sources 50, 52.

Chaque entrepôt source 38, 40 comporte, d'une part, un support physique de stockage 42, 44, dans lequel des occurrences d'informations sont enregistrées, et, d'autre part, un logiciel de gestion 46, 48 du support physique de stockage 42, 44, ce logiciel de gestion 46, 48 étant adapté pour recevoir des requêtes de consultation ou de modification des occurrences d'informations enregistrées dans le support physique de stockage, les requêtes étant rédigées dans un second langage de requête.

Dans l'exemple illustré, le premier entrepôt source 38 comprend une occurrence source 50 de l'information A, tandis que le second entrepôt source 40 comprend une occurrence source 52 de l'information B.

Généralement, le serveur de référence 14 et le ou les ordinateurs 12 sont installés et gérés par une même entreprise, par exemple de fabrication de machines. Les serveurs sources 16, 18 sont installés chacun soit chez un sous-traitant, soit au sein de l'entreprise, par exemple dans une usine délocalisée. Le personnel technique a ainsi accès aux entrepôts sources 38, 40 pour pouvoir modifier les occurrences 50, 52 des informations A, B qu'ils contiennent.

Chacun des entrepôts de données 38, 40 est adapté pour traiter des requêtes qui lui sont envoyées, afin par exemple de modifier ou simplement consulter les données qu'il contient. Le langage de rédaction de ces requêtes dépend du type de l'entrepôt de données. Ainsi, des requêtes seront rédigées dans le langage Oracle lorsque l'entrepôt de données est une base de données Oracle, tandis que des requêtes seront rédigées dans le langage Access lorsque l'entrepôt de données est une base de données Access.

Afin de répercuter les modifications des occurrences sources 38, 40 des informations A, B sur les autres occurrences des informations A, B, le système de gestion 10 comprend plusieurs agents informatiques.

Un agent informatique est une entité logicielle (programme, processus, routine, etc.) exécutée par du matériel informatique pour réaliser certaines tâches. Chaque agent informatique est indépendant des autres agents informatiques. Cela signifie que le fonctionnement d'un agent n'est pas lié au fonctionnement des autres agents. Ainsi, un agent fonctionne même si les autres agents sont arrêtés, par exemple suite à une défaillance d'une partie du système 10.

En outre, les agents informatiques sont indépendants des logiciels de gestion des entrepôts de données, c'est-à-dire qu'ils sont adaptés pour être exécutés indépendamment de l'exécution des logiciels de gestion. Ainsi, les agents informatiques viennent se greffer sur des entrepôts de données fonctionnels déjà existant. Grâce à cette structure, il est aisé d'ajouter ou de retirer des agents, car il n'est pas nécessaire de modifier l'entrepôt de donnée lui-même.

Les agents se répartissent en trois catégories : les agents dits locaux exécutés par l'ordinateur 12, les agents dits de référence exécutés par le serveur de référence 14, et les agents dits sources exécutés par les serveurs sources 16, 18.

Chaque occurrence locale 16 du document informatique 34 est associée à un agent local. Sur la figure 1, un seul agent local 54 est représenté, qui est associé à l'occurrence locale 36 de l'information A.

Le serveur de référence 14 comprend, pour chaque occurrence de référence 26, 28, un agent informatique associé, dit agent de référence 56, 58. Chaque agent de référence 56, 58 est chargé de répercuter les modifications apportées aux occurrences sources 50, 52 dans l'entrepôt de référence 24. Chaque agent de référence est associé à un unique agent source respectif 60, 62.

Chaque agent source 60, 62 est associé à une unique occurrence source d'information 50, 52 et a pour but de surveiller l'occurrence source 50, 52 associée, pour avertir l'agent de référence associé 50, 52 de la survenue d'une modification.

L'ordinateur 12 comprend en outre des moyens 64 de visualisation du document informatique 34. Ces moyens 64 sont par exemple configurés pour envoyer des instructions d'affichage à un écran d'ordinateur 66, ou bien des instructions d'impression à une imprimante 68. Les moyens de visualisation 64 sont en outre configurés pour solliciter les agents locaux 54 afin que ces derniers vérifient la mise à jour des occurrences locales 36 du document informatique 34, et, le cas échéant, mettent à jour ces occurrences locales 34 à partir du serveur de référence 14, avant que ne soient envoyées les instructions d'affichage ou d'impression.

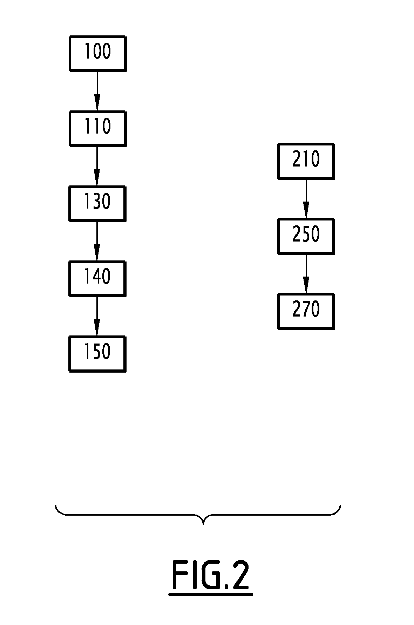

Le fonctionnement du système de gestion d'information 10 va à présent être décrit, en référence aux figures 1 et 2.

Lorsque les données du système 10 sont à jour, les occurrences associées d'une même information, c'est-à-dire les occurrences source, de référence et éventuellement locale, sont identiques.

Mais, lorsqu'une occurrence source d'une information est modifiée, il est nécessaire de mettre à jour les autres occurrences (de référence et locale) en conséquence.

Ainsi, le système de gestion d'informations 10 met en oeuvre un premier procédé de mise à jour entre l'ordinateur 12 et le serveur de référence 14.

Le premier procédé débute lorsqu'un utilisateur active les moyens de visualisation 64 pour visualiser le document 34.

Il s'ensuit une première étape 100 au cours de laquelle les moyens de visualisation 64 sollicitent chaque agent local 54.

En réponse à la sollicitation, chaque agent 54 lit (étape 110) l'occurrence de référence 26 dans l'entrepôt de référence 14. Cette lecture se fait directement sur le support de données 30, sans passer par le logiciel de gestion 30. L'agent local 54 recopie alors (étape 130) cette occurrence lue à la place de l'occurrence locale associée 36.

Lorsque toutes les occurrences d'informations 36 du document 34 ont été recopiées par les agents respectifs 54, le document 34 est traité (étape 140) par les moyens de visualisation 64, afin que des instructions de visualisation de ce document 34 soient envoyées (étape 150) à l'écran 66 et/ou à l'imprimante 68.

Ainsi, le document visualisé par l'utilisateur tient toujours compte des dernières informations telles qu'elles sont présentes dans l'entrepôt de référence 14.

Par ailleurs, le système de gestion d'informations 10 met en oeuvre un second procédé de mise à jour entre l'entrepôt de référence 14 et chacun des entrepôts source 38, 40. Ce second procédé est mis en oeuvre de manière continue, indépendamment de la réalisation du premier procédé de mise à jour. Les étapes qui suivent concernent un couple agent source/agent de référence associés. Bien sûr, les étapes sont également mises en oeuvre par les autres couples (par exemple le couple 58/62), mais de manière indépendante.

Suite à la modification de l'occurrence source, l'agent source 52 lit (étape 210) l'occurrence source de l'entrepôt de données 38, cette lecture se fait directement sur le support de données 42, sans passer par le logiciel de gestion 46. Puis il envoie (étape 250) un message de modification comprenant l'occurrence 50 lue. Cette occurrence 50 lue constitue donc des données de modification destinées à mettre à jour l'occurrence de référence 26.

En alternative, le message de modification comprend uniquement les modifications apportées à l'occurrence lue 50.

Suite à la réception du message de modification de la part de l'agent source 60, l'agent de référence modifie (étape 270) l'occurrence de référence 26, à partir des données représentant la modification de la première occurrence de l'information 50 de l'étape 250.

Dans le cas où ces données sont l'occurrence source 50 lue, l'étape 270 consiste à écraser l'occurrence de référence avec l'occurrence source lue.

Ainsi, l'entrepôt de référence 24 est mis à jour quasiment en temps réel par rapport aux modifications apportées aux entrepôts sources 38, 40.

## Revendications

1. Système de gestion d'informations, comprenant :
- un premier entrepôt de données (38) comportant :
+ un premier support physique de stockage (42), dans lequel des occurrences d'informations sont enregistrées,
- un second entrepôt de données (24) comportant :
+ un second support physique de stockage (30), dans lequel des occurrences d'informations sont enregistrées,
le système de gestion d'informations étant **caractérisé en ce qu'**il comprend, pour chaque information d'un ensemble d'informations dont une première occurrence (50) est enregistrée dans le premier support physique de stockage et dont une seconde occurrence (26) est enregistrée dans le second support physique de stockage (30) :
- un logiciel de surveillance (60) de la première occurrence de l'information,
- un logiciel de modification (56) de la seconde occurrence de l'information,
le logiciel de surveillance (60) étant configuré pour, en cas de modification de la première occurrence (50), envoyer un message de modification à destination du logiciel de modification (56), ce message de modification comportant des données représentant la modification de la première occurrence de l'information (50),
chaque logiciel de surveillance étant associé à une unique première occurrence d'information, chaque logiciel de modification étant associé à une unique seconde occurrence d'information,
le logiciel de modification (56) étant configuré pour, suite à la réception du message de modification de la part du logiciel de surveillance (60), modifier la seconde occurrence de l'information (26) à partir des données représentant la modification de la première occurrence (50), les logiciels de surveillance et les logiciels de modification étant chacun adaptés pour être exécutés indépendamment de l'exécution des autres.

2. Système de gestion d'informations selon la revendication 1, **caractérisé en ce que** le logiciel de surveillance est configuré pour, suite à la modification de la première occurrence (50), lire la première occurrence de l'information, les données représentant la modification de la première occurrence de l'information comportant la première occurrence lue.

3. Système de gestion d'informations selon la revendication 1, **caractérisé en ce que** le message de modification à destination du logiciel de modification (56) comprend uniquement les modifications apportées à la première occurrence (50).

4. Système selon l'une quelconque des revendication 1 à 3, **caractérisé en ce qu'**il comprend :
- un document informatique (34) comportant au moins une troisième occurrence (36) d'une information de l'ensemble d'informations dont une première occurrence (50) est enregistrée dans le premier support physique de stockage et dont une seconde occurrence (26) est enregistrée dans le second support physique de stockage (30),
- des moyens de visualisation (64) du document (34) configurés pour traiter le document informatique (34) pour générer des instructions de visualisation, par exemple à destination d'un écran (66) ou d'une imprimante (68), et
- pour chaque troisième occurrence, un logiciel de mise à jour (54) de la troisième occurrence de l'information, configuré pour :
* lire la seconde occurrence de l'information (26),
* recopier dans le document informatique la troisième occurrence de l'information (36) par la seconde occurrence (26) lue,
les moyens de visualisation (64) étant configurés pour solliciter les logiciels de mise à jour (54) de toutes les troisièmes occurrences d'information du document informatique, afin que ces logiciels de mise à jour (54) réalisent les étapes précédentes.

5. Procédé de gestion d'informations d'un système d'informations selon l'une quelconque des revendications 1 à 4, **caractérisé en ce qu'**il comprend :
- si la première occurrence (50) est modifiée, l'envoi par le logiciel de surveillance (60) d'un message de modification à destination du logiciel de modification (56), ce message de modification comportant des données représentant la modification de la première occurrence de l'information (50),
- suite à la réception du message de modification par le logiciel de modification, représentant la modification de la première occurrence (50) de l'information la modification par le logiciel de modification la seconde occurrence de l'information (26) à partir des données représentant la modification de la première occurrence (50) de l'information.
